# EUROPEAN PATENT APPLICATION

(11) **EP 3 386 081 A1**
(43) Date of publication of application: **10.10.2018**
(21) Application number: 17165404.9
(22) Date of filing: 07.04.2017
(51) Int. Cl.: H02K 21/14, H02K 21/16, H02K 53/00, H02K 29/03, H03F 9/00

(54) **SYNCHRONOUS ELECTRIC MOTOR AND A POWER SUPPLY SYSTEM FOR ELECTRIC MOTOR**

(71) Applicant: B2GM spolka z orgraniczona odpowiedzialnoscia, 00-116 Warszawa (PL)
(72) Inventor: BRYLINSKI, Dariusz, 05-200 Wolomin (PL); MRUSEK, Gregor, 51503 Rösrath (DE); MAKOWSKI, Leszek, 06-100 PuLtusk (PL)
(74) Representative: Rzazewska, Dorota

(57) **Abstract**

The invention provides a synchronous electric motor (10) comprising a rotor (2) with poles, mounted on an axis, separated by an air gap (7) from surrounding poles of a stator (4). The poles of the rotor (2) are magnetised alternately, and on the poles of the stator (4) windings (5) connected in series or in parallel are wound, which magnetise the stator (4) in a direction depending on a direction of current flow in the windings (5) of the stator (4).

The object of the invention is also a power supply system for the electric motor (10) which comprises an AC generator (16) placed on a shaft (12) connected by a control coupling (15) to a shaft (11) on which the rotor (2) of the electric motor (10) is placed. Additionally, in a supply circuit, there is a magnetic amplifier (13) connected in series to the generator (16) and to the motor (10).

## Description

The object of the present invention is a synchronous electric motor in which the generator operation is not possible. The object of the present invention is also a power supply system for the electric motor.

Traditional electric machines convert electrical energy to mechanical energy (motors) and mechanical energy to electrical energy (generators) through an induced electromotive force EMF. Each motor can operate as a generator and vice versa, each generator can be a motor. These are reversible electric machines.

In patent application US 3344325 A, an electric stepping motor having a plurality of field pole sectors energised by separate field coil means. A permanent magnet rotor having a plurality of rotor pole tips is arranged to be actuated by the attractive and repulsive magnetic forces developed in conjunction with the pole sectors. A field coil energising circuit is being used to produce a predetermined pattern of magnetic field poles to correspond to a desired direction of rotation of the rotor. The energising circuit is self-synchronising to maintain a desired rotor rotation even after a disruption of the pattern of field poles produced by the energising circuit. A stepping motor comprises a rotor having an even number of permanent magnet poles, said magnet poles being evenly arranged and in an alternate polarity around periphery, stator means having an even number of stator sectors, said sectors being symmetrically arranged in a circle to enclose the rotor and separated therefrom and from each other by non-magnetic gaps. Each of the sectors has a pair of field pole faces spaced so as to correspond to the spacing of the magnet poles and a plurality of energising windings inductively coupled to individual ones of sector pieces to provide opposite magnetic poles at these pole faces on each of the sectors.

In traditional electric machines, one common magnetic core is used for stator and rotor fluxes. Occurrence of electromotive force of rotation EMF is a prerequisite for energy transformation in reversible electric machines. With the increase in revolutions, in this type of machines, the electromotive force EMF increases, and because it is directed oppositely to a (motor) supply voltage, negative feedback is created. Higher revolutions require higher feed voltage.

Construction of traditional electric motors is characterised in that the number of poles on the stator is higher than or equal to the number of poles on the rotor, which means that angular width of the poles of the stator is at least equal to or lower than the sum of the angular widths of the pole and the gap between the poles of the rotor.

A synchronous electric motor comprising a rotor with poles, mounted on the axis, separated by an air gap from surrounding poles of a stator is characterised in that the poles of the rotor are magnetised alternately, and on the poles of the stator the windings connected in series or in parallel are wound, which magnetise the stator in a direction depending on the direction of current flow in the windings of the stator.

Preferably, the angular width of the poles of the stator is equal to two, or a multiple of two, times the angular width of the poles of the rotor.

Preferably, the electric motor is powered taking into account the phase shift between the voltage and the supply current.

Preferably, the electric motor is powered by an AC generator placed on a shaft connected by a control coupling to the shaft on which the rotor is placed, additionally, in the supply circuit, there is a magnetic amplifier connected in series to the generator and to the motor.

Preferably, the poles of the stator contain an excitation flux coming from the poles on the rotor.

Preferably, the electric motor comprises separate magnetic cores for the fluxes of the stator and for the fluxes of the rotor. A magnetic coupling factor between the magnetic cores is zero, and this causes lack of induced electromotive force of rotation EMF in the stator winding. The angular position of the rotor does not affect the EMF induced in the stator.

Preferably, there are three times more magnetic poles on the rotor than on the stator.

Preferably, the poles are arranged on the lateral surface of the rotor.

Preferably, the poles of the rotor are permanent magnets.

Preferably, the rotor is made of a ferromagnetic material.

Preferably, the electric motor is powered with alternating current synchronously with revolutions of the rotor.

A power supply system for the electric motor is characterised in that it comprises an AC generator arranged on a shaft connected by a control coupling to a shaft on which the rotor of the electric motor is placed. Additionally, in the supply circuit, there is a magnetic amplifier connected in series to the generator and to the motor.

Preferably, the magnetic amplifier is powered with direct current.

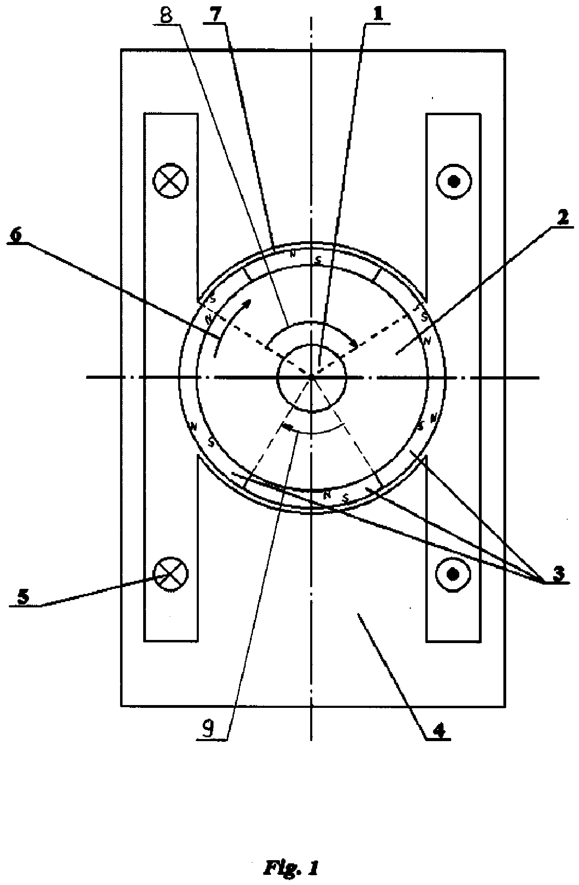

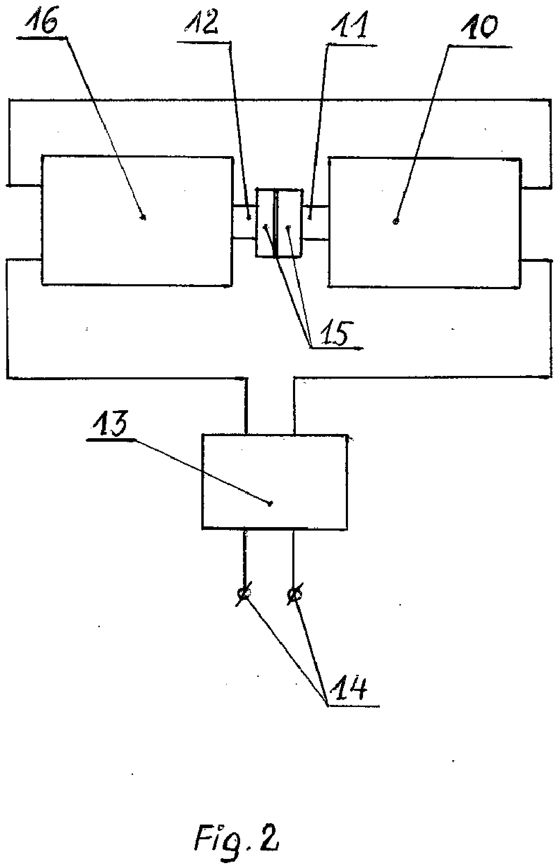

The object of the invention is shown in the drawings in which Fig. 1 shows a synchronous electric motor in a perpendicular cross-section, Fig. 2 - a block diagram of the power supply system of the electric motor.

### List of reference numerals:

- 1: motor shaft
- 2: rotor
- 3: permanent magnets of the rotor
- 4: stator of the motor
- 5: stator winding
- 6: direction of the rotor motion
- 7: air gap
- 8: angular width of the poles of the stator
- 9: angular width of the poles of the rotor
- 10: motor according to the invention
- 11: shaft of the electric motor
- 12: shaft of the generator
- 13: adjustable magnetic amplifier
- 14: DC terminals
- 15: coupling
- 16: AC generator

A synchronous electric motor is shown in an embodiment in Fig. 1, in a cross-section perpendicular to the axis of its shaft 1. On the axis of the shaft 1, a rotor 2 of ferromagnetic material is mounted, and on its lateral surface, poles are arranged. In another embodiment, the poles are permanent magnets 3. A magnetisation direction of the poles is alternating. The rotor 2 is separated from the poles of a stator 4 by an air gap 7. The windings 5 which are connected in series are wound on the poles of the stator 4. In another embodiment, the windings 5 can be connected in parallel. The windings 5 magnetise the stator 4 in a direction depending on the direction of current flow in the windings 5. In Fig. 1, a direction 6 of rotation of the rotor 2, the angular width 8 of the poles of the stator 4, and an angular width 9 of the poles of the rotor 2 are also indicated. The angular width 8 of the poles of the stator 4 equals to two angular widths 9 of the poles of the rotor 2. The magnetisation direction of the poles on the rotor 2 is alternating. In any angular position of the rotor 2 relative to the stator 4 under the poles of the stator 4, there are two opposite poles of the rotor 2.

The above configuration causes absence of excitation flux coming from the poles of the rotor 2 in a yoke of the stator 4, and this translates into an inability to induce the electromotive force EMF in the windings 5 of the stator 4. The excitation flux closes across the axis of the poles of the stator 4 with omission of the yoke. This lack of EMF causes that the motor 10 can only operate as a motor and cannot operate as a generator. The inductance of the winding 5 is constant at each position of the rotor 2 and the motor 10, for the AC supply voltage, acts like a conventional choke.

In another embodiment, the angular width 8 of the poles of the stator 4 is equal to an even multiple of the angular width 9 of the poles of the rotor 2.

In yet another embodiment, the motor 10 has separate magnetic cores for the flux of the stator 4 and for the flux of the rotor 2.

In still another embodiment, on the rotor 2 of the motor 10 there are three times more magnetic poles than on the stator 4.

The motor 10, in yet another embodiment, is powered with alternating current synchronously with revolutions of the rotor 2. A driving torque of such motor 10 and its revolutions depend on the voltage and the supply current in the winding 5, as well as power input depends on a cosine of the phase shift angle which is close to zero for each load. The poles of the stator 4 contain the excitation flux coming from the poles on the rotor 2.

The motor 10, in an another embodiment, is powered so that a maximum supply current is at the moment when there is a gap between the poles of the rotor 2 on the axis of the poles of the stator 4.

A mechanical load on the motor 10, in another embodiment, causes a decrease in its revolutions. At a constant supply voltage and reduced frequency (synchronous power supply), higher current flows through the winding 5 of the motor 10 (constant inductance), compensating the change in revolutions by increasing the supply current and torque. The effect is as if increasing the mechanical load of the motor 10 caused an apparent decrease in inductance of the winding 5 at a constant supply voltage. In fact, due to the lower frequency of the supply voltage, impedance of the motor 10 decreases.

Since the electromotive force of rotation is not induced in the windings of the motor 10, the motor 10 does not convert electrical energy into mechanical energy like a conventional reversible electric machine. The driving torque comes from magnetostatic reactions between magnetic poles of the stator 4 and the rotor 2. The brought supply energy covers only losses incurred in the winding 5 (heat generated in a copper), in an iron (losses due to a hysteresis and vortex currents) and mechanical losses.

In an embodiment, the motor 10 is powered by an AC generator 16 arranged on the shaft 12 connected through a control coupling 15 to a shaft 11 on which the rotor 2 is placed. Additionally, in the supply circuit, there is a magnetic amplifier 13 connected in series to the generator 16 and to the motor 10.

In Fig. 2, an embodiment of the power supply system for powering the motor 10 from an AC supply generator 16 taking into account the phase shift between the voltage and the supply current is shown. The generator 16 has a shaft 12 connected through a control coupling 15 to the shaft 11 of the motor 10. The control coupling 15 is able to adjust a relative angular position of the rotors. The rotor 2 of the motor 10 is located on the shaft 11. Additionally, in a supply circuit, there is a magnetic amplifier 13 connected in series to the generator 16 and to the motor 10 for adjusting the supply current and effective torque of the motor 10. Applying the direct current to the terminals 14 of the magnetic amplifier 13 which control the supply current lowers its impedance for the alternating current and increases the supply current (torque) of the motor 10.

The synchronous electric motor 10 can be used as a mechanical energy source, an universal drive unit and wherever a high efficiency is required.

The embodiments are given here only as non-limiting indications relating to the invention and cannot in any way limit a scope of protection defined by claims.

## Claims

1. A synchronous electric motor (10) comprising a rotor (2) with poles, mounted on the axis, separated by an air gap (7) from surrounding poles of a stator (4) **characterised in that** the poles of the rotor (2) are magnetised alternately, and on the poles of the stator (4) the windings (5) connected in series or in parallel are wound, which magnetise the stator (4) in a direction depending on the direction of current flow in the windings (5) of the stator (4).

2. The synchronous electric motor (10) according to claim 1, **characterised in that** the angular width (8) of the poles of the stator (4) is equal to two, or a multiple of two, times the angular width (9) of the poles of the rotor (2).

3. The synchronous electric motor (10) according to claim 1, **characterised in that** it is powered taking into account the phase shift between the voltage and the supply current.

4. The synchronous electric motor (10) according to claim 1, **characterised in that** the electric motor (10) is powered by an AC generator (16) placed on a shaft (12) connected by a control coupling (15) to the shaft (11) on which the rotor (2) is placed, additionally, in the supply circuit, there is a magnetic amplifier (13) connected in series to the generator (16) and to the motor (10).

5. The synchronous electric motor (10) according to claim 1, **characterised in that** the poles of the stator (4) contain an excitation flux coming from the poles on the rotor (2).

6. The synchronous electric motor (10) according to claim 1, **characterised in that** it comprises separate magnetic cores for the fluxes of the stator (4) and for the fluxes of the rotor (2).

7. The synchronous electric motor (10) according to claim 1, **characterised in that** there are three times more magnetic poles on the rotor (2) than on the stator (4).

8. The synchronous electric motor (10) according to claim 1, **characterised in that** the poles are arranged on the lateral surface of the rotor (2).

9. The synchronous electric motor (10) according to claim 1, **characterised in that** the poles of the rotor (2) are permanent magnets (3).

10. The synchronous electric motor (10) according to claim 1, **characterised in that** the rotor (2) is made of a ferromagnetic material.

11. The synchronous electric motor (10) according to claim 1, **characterised in that** it is powered with alternating current synchronously with revolutions of the rotor (2).

12. A power supply system for the electric motor (10) **characterised in that** the system comprises an AC generator (16) arranged on a shaft (12) connected by a control coupling (15) to a shaft (11) on which the rotor (2) of the electric motor (10) is placed, additionally, in the supply circuit, there is a magnetic amplifier (13) connected in series to the generator (16) and to the motor (10).

13. The power supply system for the electric motor (10) according to claim 12, **characterised in that** the magnetic amplifier (13) is powered with direct current.
